# EUROPÄISCHE PATENTSCHRIFT

(11) **EP 0 874 724 B1**
(45) Veröffentlichungstag und Bekanntmachung des Hinweises auf die Patenterteilung: **21.11.2001**
(21) Anmeldenummer: 97912107.6
(22) Anmeldetag: 02.10.1997
(51) Int. Cl.: B29C 47/40, B29B 7/48

(54) **MEHRWELLIGE KONTINUIERLICH ARBEITENDE MISCHMASCHINE FÜR PLASTIFIZIERBARE MASSEN**
MULTISHAFT CONTINUOUS OPERATION MIXING MACHINE FOR PLASTIFIABLE MATERIALS
MELANGEUR A PLUSIEURS ARBRES FONCTIONNANT EN CONTINU ET DESTINE A DES MATIERES PLASTIFIABLES

(30) Priorität: 07.10.1996 DE 19641235
(43) Veröffentlichungstag der Anmeldung: 04.11.1998
(73) Patentinhaber: Berstorff GmbH, 30625 Hannover (DE)
(72) Erfinder: ROCKSTEDT, Siegward, D-53474 Bad Neuenahr-Ahrweiler (DE)
(74) Vertreter: Bardehle, Heinz, Dipl.-Ing.
(86) Internationale Anmeldenummer: EP9705447
(87) Internationale Veröffentlichungsnummer: WO9815400

(56) Entgegenhaltungen:
- DE-C- 4 338 795
- US-A- 4 541 270
- US-A- 5 267 788

## Beschreibung

Die Erfindung bezieht sich auf eine mehrwellige kontinuierlich arbeitende Mischmaschine für plastifizierbare Massen mit zwei in einem Gehäuse gleichsinnig drehenden Wellen, die jeweils ein die betreffende Welle umgebendes zylindrisches Gehäuseteil durchsetzen und Einzugs- und Austragszonen sowie dazwischen mindestens eine Aufschmelz- und ein Mischzone aufweisen, wobei die Einzugs- und Austragszonen durch ineinandergreifende Förderschnecken gebildet und in den Aufschmelz- bzw. Mischzonen gegenüberliegende Mischelemente angeordnet sind, denen Stauelemente nachgeordnet sind, die aus kurzen Schnekken mit Rückfördergewinde bestehen, das jeweils gegensinnig zu der Steigerung der Förderelemente verläuft.

Eine derartige Maschine ist in der DE-PS 43 38 795 (= US-PS 5 499 870) beschreiben. Bei dieser Maschine sorgen die den Mischelementen nachgeordneten Stauelemente dafür, daß eine sich über die Mischelemente erstreckende Kammer ständig gefüllt ist, wobei vorausgesetzt ist, daß der Maschine ständig zu mischendes Material in einer entsprechenden Menge zugeführt wird. Beider bekannten Maschine bestehen die Stauelemente aus kurzen Schnecken mit unterbrochenem Rückfördergewinde. Aufgrund der Unterbrechungen im Bereich der Scheitel des Rückfördergewindes ergeben sich gewissermaßen Überströmkanäle, die aufgrund ihrer Größe einen Durchfluß des plastifizierten Materials ermöglichen.

Aufgrund der Unterbrechungen in dem Rückfördergewinde liegt unabhängig von der Drehzahl, mit der die Maschine jeweils betrieben wird, eine hinsichtlich ihres Querschnittes gleichbleibende Durchflußöffnung vor, was zur Folge hat, daß in der sich über die Mischelemente erstreckenden Kammer in wesentlichen unabhängig von der Drehzahl stets der gleiche Druck herrscht.

Der Erfindung liegt die Aufgabe zugrunde, in der Kammer einen jeweils wählbaren unterschiedlichen Druck herbeiführen zu können. Erfindungsgemäß geschieht das dadurch, daß das Rückfördergewinde einen Scheitel bildet, der derart radial verkürzt entlang eines Gewindeganges verläuft, daß in Bezug auf die Förderrichtung der Mischmaschine auf der Eingangsseite der Scheitelradius kürzer als auf der Ausgangsseite ist und dazwischen kontinuierlich in Richtung zur Ausgangsseite zunimmt.

Aufgrund dieser Gestaltung der Scheitel des Rückfördergewindes ergibt sich der überraschende Effekt, daß mit zunehmender Drehzahl der Druck in der Kammer ansteigt. Der Betreiber der Maschine hat es somit in der Hand, durch Änderung der Drehzahl der beiden Wellen der Maschine den Druck in der Kammer wahlweise einstellen zu können, was sich dazu ausnutzen läßt, einen besonderen Einfluß auf das zu plastifizierende Material auszuüben. Dabei ergibt sich mit zunehmendem Druck in der Kammer eine Vergrößerung der dem zu plastifizierende Material zugeführten Energiemenge, was sich je nach Viskosität des betreffenden Materials in einer entsprechenden Temperatur in der Kammer äußert. Außerdem ergibt sich unter anderem der Effekt, daß dem zu plasifizierenden Material beigefügten Zuschlagstoffe sich mehr oder minder intensiv mit dem Material vermischen.

Aufgrund dieser einfachen Maßnahme der jeweils wahlweise eingestellten Drehzahl der Maschine läßt sich mit dieser ein breites Spektrum unterschiedlicher Materialien verarbeiten, ohne daß es einer Änderung der Konfiguration der Elemente der Maschine, insbesondere der Stauelemente bedarf, was jeweils ein Auseinandernehmen und Neuzusammensetzen der Maschine erforderlich machen würde. Zur Anpassung an die Verarbeitung eines anderen Materials ist bei der erfindungsgemäßen Maschine lediglich eine Änderung der Drehzahl erforderlich, was durch eine entsprechende Regelung des üblicherweise elektrischen Antriebsmotors ohne weiteres möglich ist. Die erfindungsgemäße Maschine ist also praktisch universell verwendbar.

Der Effekt des zunehmenden Druckes in der Kammer mit zunehmender Drehzahl läßt sich dadurch erklären, daß im Gegensatz zu den oben erwähnten Unterbrechungen im Rückfördergewinde der Stauelemente der erfindungsgemäß kontinuierlich in Durchsatzrichtung zunehmende Radius der Scheitel des Schneckengewindes einen besonderen Verdrängungseffekt hervorruft, der offenbar um so ausgeprägter wirksam wird, je höher die Drehzahl der Maschine ist, so daß sich bei extrem hohen Drehzahlen praktisch ein weitgehender Abschluß der Kammer durch die Stauelemente ergibt, die am Ende ihrer Gewindegänge auf der Ausgangsseite der Kammer ineinander eingreifen und somit dort einen vollständigen Abschluß bilden. Dabei läßt der Gewindebereich mit relativ kurzem Radius das Material hindurchfließen, allerdings bei höherer Drehzahl stark reduziert, offenbar weil bei höherer Drehzahl das Material durch den in Förderrichtung ansteigenden Radius des Scheitels um so schneller in Richtung Rückförderung erfaßt wird, je höher die Drehzahl ist.

Zweckmäßig gestaltet man den Scheitelradius derart, daß die Scheitel gegenüberliegender Stauelemente auf der Eingangsseite aneinander vorbeilaufen und danach soweit ansteigen, daß die Scheitel auf der Ausgangsseite völlig ineinander eingreifen.

Es hat sich gezeigt, daß bei einer derartigen Gestaltung der Scheitel der Einfluß der Drehzahl der Maschine besonders ausgeprägt ist.

Es ist möglich, die erfindungsgemäß mit dem sich ändernden Scheitelradius versehenen Stauelemente zusätzlich im Bereich der Scheitel mit Unterbrechungen in Form von radial verlaufenden Vertiefungen zu versehen, wenn ein besonders großer Durchsatz im Bereich der Stauelemente erwünscht oder erforderlich ist.

Zweckmäßig kombiniert man die erfindungsgemäß ausgebildeten Stauelemente mit vorgeordneten Mischelementen, die ebenfalls nach Art von Förderschnecken ausgebildet sind, allerdings mit derartiger Steigungsrichtung, daß innerhalb einer sich über die Mischelemente erstreckenden Kammer das eine Mischelement entgegengesetzt zur Förderrichtung der Mischmaschine rückwärts fordert.

In den Figuren sind Ausführungsbeispiele der Erfindung dargestellt. Es zeigen:
- **Figur 1**: einen Ausschnitt aus einer Mischmaschine in dem hier interessierenden Umfang in Draufsicht,
- **Figur 2**: eine Abwandlung der Maschine gemäß Figur 1 mit Unterbrechungen in den Scheiteln der Rückfördergewinde.

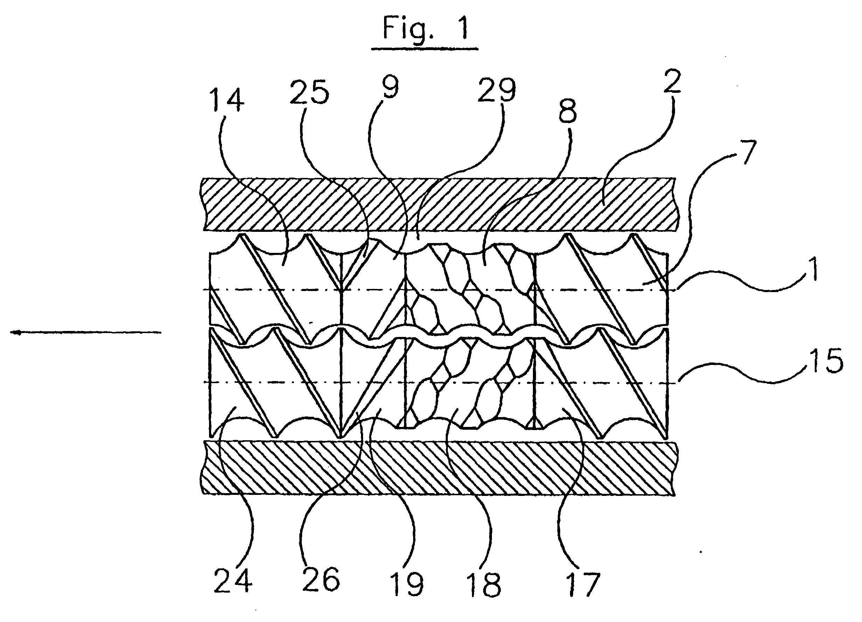

Figur 1 zeigt einen Ausschnitt aus einer Mischmaschine, wie sie in prinzipiell gleicher Weise in der oben erwähnten DE-PS 43 38 795 offenbart ist. In Figur 1 sind nur die in diesem Zusammenhang interessierenden Bauteile gezeigt, auf die nachstehend im einzelnen eingegangen sei.

Figur 1 zeigt eine zweiwellige Mischmaschine in Draufsicht mit geschnitten gezeichnetem Gehäuse 2, so daß die beiden Wellen 1 und 15 sichtbar sind. Beide Wellen werden zusammen in gleichem Drehsinn durch ein nicht dargestelltes Antriebsaggregat angetrieben, wie dieses in der oben erwähnten DE-PS 43 38 795 gezeigt ist. Die Wellen 1 und 15 weisen auf ihrer Eingangsseite die Förderschnecken 7 und 17 auf, die in Richtung des eingezeichneten Pfeils das der Maschine zugeführte zu mischende Material fördern. Die beiden Förderschnecken 7 und 17 greifen praktisch vollständig ineinander ein und laufen im gleichen Drehsinn mit gleicher Drehzahl. Es handelt sich dabei also um in bekannter Weise ineinandergreifende gleichsinnig angetriebene Förderschnecken, die aufgrund der ihnen innewohnenden Funktion das ihnen zugeführte Material von rechts nach links transportieren. An die Förderschnecken 7 und 17 schließen sich die Mischelemente 8 und 18 an. Der Bereich, über den sich die Mischelemente 8 und 18 erstrecken, bildet eine Kammer 29, in der das von den Förderschnecken 7 und 17 antransportierte Material gemischt wird, wobei das Material längs der Welle 1 vorwärts und längs der Welle 15 rückwärts gefördert wird. Das rückwärts geförderte Material trifft dann auf neu von den Förderschnecken 7 und 17 hinzugeführtes Material, so daß es auf das Mischelement 8 umgelenkt und von diesem wieder vorwärts gefördert wird. Es ergibt sich damit also ein Kreislauf, der sich um so häufiger wiederholt, je weniger Material von den Förderschnecken 7 und 17 nachgeschoben wird. Die Verweilzeit im Bereich der Mischelemente 8 und 18 ergibt sich also aus dem Nachschub an Material über die Förderschnecken 7 und 17.

Auf die Mischelemente 8 und 18 folgen die als relativ kurze Schnecken ausgebildeten Stauelemente 9 und 19, die aufgrund der Steigung ihres Gewindes, die gegensinnig zu der Steigung der Förderschnecken 7 und 17 verläuft, das ihnen zugeführte Material zurückstauen. Diese Stauwirkung wird hier durch die Scheitel 25 und 26 ihres Gewindes in besonderer Weise modifiziert. Die Scheitel 25 und 26 sind nämlich ähnlich einer Zylinderoberfläche abgeflacht, wobei der Radius der Scheitel auf der den Mischelementen 8 und 18 zugewandten Seite (Eingangsseite) kürzer ist als auf der Ausgangsseite, die durch die folgenden Förderschnecken 14 und 24 gebildet ist. Diese von der Eingangsseite zur Ausgangsseite hin verlaufende Vergrößerung des Radius der Scheitel 25 und 26 äußert sich in der Darstellung gemäß Figur 1 als der Übergang von einem relativ breiten Scheitel zu einem relativ schmalen Scheitel, das heißt, der Radius der Scheitel nimmt kontinuierlich in Richtung zur Ausgangsseite zu. Hierdurch bilden sich Durchlässe für das von den Mischelementen 8 und 18 her geförderte Material aus, und zwar insbesondere im Bereich der kurzen Radien der Scheitel 25 und 26, wobei sich, wie eingangs dargelegt, der Effekt ergibt, daß der Durchsatz des den Stauelementen 9 und 19 zugeführten Materials um so stärker gehemmt wird, je höher die Drehzahl der beiden Wellen 1 und 15 ist.

Das von dem Stauelementen 9 und 19 hindurchgelassene Material gelangt dann in den Bereich der anschließenden Förderschnecken 14 und 24 und wird von diesen in bekannter Weise weitergefördert, wie dies in der DE-PS 43 38 795 beschrieben ist.

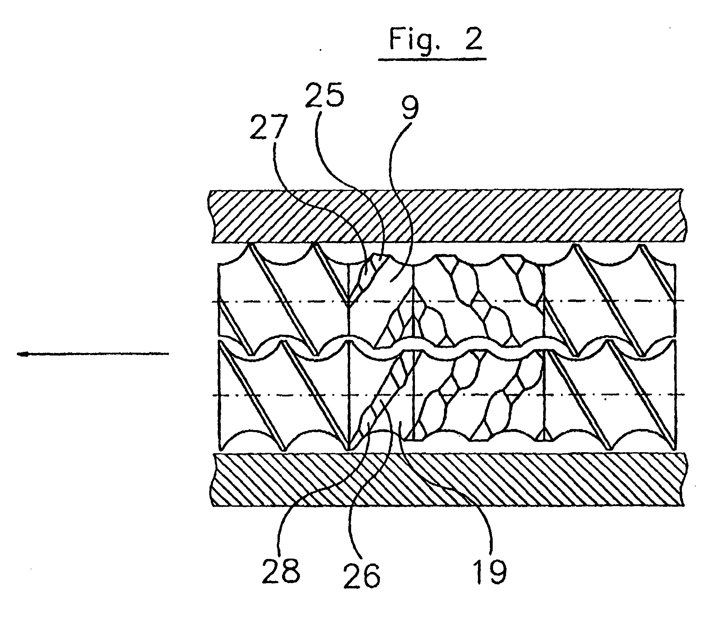

In der Figur 2 ist eine Abwandlung der in Figur 1 ausschnittsweise dargestellten Maschine gezeigt, bei der die Stauelemente 9 und 19 hinsichtlich der Scheitel ihrer Gewindegänge 25 und 26 anders gestaltet sind. Die Gewindegänge 25 und 26 enthalten nämlich zusätzlich zur Radiusänderung Vertiefungen 27 und 28, die radial nach innen zu verlaufen. Diese Vertiefungen 27 und 28 können je nach gewünschtem Durchsatz mehr oder minder weit den betreffenden Scheitel 25, 26 unterbrechen, und zwar hinsichtlich Länge und Tiefe. Hierdurch läßt sich die Durchsatzgeschwindigkeit des Materials grundsätzlich beeinflußen. Durch diese Vertiefungen wird die Maschine insgesamt durchlässiger. Ansonsten ändert sich an der Gestaltung der Schenkel 25 und 26 nichts, diese sind ähnlich wie beim Ausführungsbeispiel gemäß Figur 1 so gestaltet, daß, abgesehen von den Vertiefungen, ihr Radius in Richtung des Durchsatzes durch die Maschine zunimmt.

Die Größenverhältnisse der Schenkel 25 und 26 sind in der Figuren 1 und 2 so gewählt, daß die Scheitel 25 und 26 auf der Eingangsseite, also den Mischelementen 8 und 18 zugewandt, an einander vorbeilaufen und danach soweit ansteigen, daß die Scheitel 25 und 26 auf der Ausgangsseite völlig eineinander eingreifen.

Es sei noch darauf hingewiesen, daß die in den Figuren 1 und 2 dargestellte Aufeinanderfolge von Förderschnecken, Mischelementen und Stauelementen natürlich mehrfach hintereinander angeordnet werden kann.

## Patentansprüche

1. Mehrwellige kontinuierlich arbeitende Mischmaschine für plastifizierbare Massen mit zwei in einem Gehäuse (2) gleichsinnig drehenden Wellen (1, 15), die jeweils ein die betreffende Welle umgebendes zylindrisches Gehäuseteil (2) durchsetzen und Einzugs- und Austragszonen sowie dazwischen mindestens eine Aufschmelz- und eine Mischzone aufweisen, wobei die Einzugs- und Austragszonen durch ineinandergreifende Förderschnecken (7, 17; 14, 24) gebildet und in den Aufschmelz- und Mischzonen gegenüberliegende Mischelemente (8, 18) angeordnet sind, denen Stauelemente (9, 19) nachgeordnet sind, die aus kurzen Schnecken mit Rückfördergewinde bestehen, das jeweils gegensinnig zu der Steigung der Förderelemente (7, 17; 14, 24) verläuft, **dadurch gekennzeichnet, daß** das Rückfördergewinde einen Scheitel (25, 26) bildet, der derart radial verkürzt entlang eines Gewindeganges verläuft, daß in Bezug auf die Förderrichtung der Mischmaschine auf der Eingangsseite der Scheitelradius kürzer als auf der Ausgangsseite ist und dazwischen kontinuierlich in Richtung zur Ausgangsseite zunimmt.

2. Maschine nach Anspruch 1, **dadurch gekennzeichnet, daß** der Scheitelradius sich derart verändert, daß die Scheitel (25, 26) gegenüberliegender Stauelemente (9, 19) auf der Eingangsseite aneinander vorbeilaufen und danach soweit ansteigen, daß die Scheitel (25, 26) auf der Ausgangsseite völlig ineinander eingreifen.

3. Maschine nach Anspruch 1 oder 2, **dadurch gekennzeichnet, daß** die Scheitel (25, 26) der Stauelemente Unterbrechungen (27, 28) in Form von radial verlaufenden Vertiefungen aufweisen.

4. Maschine nach einem der Ansprüche 1 bis 3, **dadurch gekennzeichnet, daß** die den Stauelementen (9,19) vorgeordneten Mischelemente (8,18) aus im wesentlichen gleich langen Schneckenelementen (8,18) mit derartiger Steigungsrichtung bestehen, daß innerhalb einer sich über die Mischelemente (8,18) erstreckenden Kammer (29) das eine Mischelement (18) entgegengesetzt zur Förderrichtung der Mischmaschine rückwärts fördert.

## Claims

1. Multishaft continuous-operation mixing machine for plastifiable materials with two shafts (1, 15) which rotate in the same direction in a housing (2), in each case penetrate a cylindrical housing part (2) surrounding the shaft concerned and have feed and metering zones and in between at least one homogenizing zone and a mixing zone, the feed and metering zones being formed by intermeshing conveying screws (7, 17; 14, 24) and mixing elements (8, 18), which lie opposite one another in the homogenizing and mixing zones and downstream of which there are restricting elements (9, 19), which comprise short screws with a back-conveying thread, which in each case runs in the opposite direction to the pitch of the conveying elements (7, 17; 14, 24), **characterized in that** the back-conveying thread forms a vertex (25, 26) which runs in such a radially shortened form along a thread turn that the vertex radius is shorter on the inlet side than on the outlet side, with respect to the conveying direction of the mixing machine, and in between increases continuously in the direction of the outlet side.

2. Machine according to Claim 1, **characterised in that** the vertex radius changes in such a way that the vertices (25, 26) of oppositely lying restricting elements (9, 19) on the inlet side run past one another and, after that, increase to such an extent that the vertices (25, 26) on the outlet side engage fully in one another.

3. Machine according to Claim 1 or 2, **characterized in that** the vertices (25, 26) of the restricting elements have interruptions (27, 28) in the form of radially running depressions.

4. Machine according to one of claims 1 to 3, **characterized in that** the mixing elements (8, 18) upstream of the restricting elements (9, 19) comprise screw elements (8, 18) of substantially the same length and with a pitch direction such that, within a chamber (29) extending over the mixing elements (8, 18), one mixing element (18) conveys backwards, opposing the conveying direction of the mixing machine.

## Revendications

1. Machine de mélange en continu de masses plastifiables à plusieurs arbres, avec deux arbres (1, 15) tournant dans le même sens dans un carter (2), qui chacun traversent une partie cylindrique de carter (2) entourant l'arbre correspondant, et comportant des zones d'admission et d'extraction ainsi que, dans l'intervalle, au moins une zone de fusion et une zone de mélange, où les zones d'admission et d'extraction sont pourvues de vis sans fin transporteuses (7, 17 ; 14, 24) mutuellement imbriquées auxquelles sont adjoints des éléments de retenue (9, 19) qui sont formés de vis sans fin courtes avec un filet de transport inversé, qui s'étendent chacun en direction inverse de la direction d'inclinaison des éléments de transport (7, 17 ; 14, 24), **caractérisé en ce que** le filet de transport inversé présente une crête (25, 26) qui s'étend en étant radialement raccourcie le long d'un pas de vis de telle manière que, par rapport à la direction de transport de la machine de mélange, du côté de l'entrée le rayon de la crête soit plus court que du côté de la sortie et que dans l'intervalle il augmente continûment en allant vers le côté de la sortie.

2. Machine selon la revendication 1, **caractérisée en ce que** le rayon de la crête change de telle manière que les crêtes (25, 26) des éléments de retenue (9, 19) situés en vis-à-vis défilent l'une face à l'autre du côté de l'entrée et présentent alors une inclinaison telle que les crêtes (25, 26) viennent s'imbriquer totalement l'une dans l'autre du côté de la sortie.

3. Machine selon la revendication 1 ou 2, **caractérisée en ce que** les crêtes (25, 26) des éléments de retenue comportent des interruptions (27, 28) en forme d'encoches s'étendant radialement.

4. Machine selon l'une des revendications 1 à 3, **caractérisée en ce que** les éléments de mélange (8, 18) disposés avant les éléments de retenue (9, 19) sont formés d'éléments de vis sans fin (8, 18) longs globalement semblables avec une direction d'inclinaison telle que, à l'intérieur d'une chambre (29) s'étendant sur les éléments de mélange (8, 18), l'un des éléments de mélange (18) transporte en sens inverse, à l'opposé de la direction de transport de la machine de mélange.
